# EUROPEAN PATENT APPLICATION

(11) **EP 0 888 971 A1**
(43) Date of publication of application: **07.01.1999**
(21) Application number: 97202065.5
(22) Date of filing: 04.07.1997
(51) Int. Cl.: B65B 25/04

(54) **Automatic box filler**

(71) Applicant: Zijlstra & Bolhuis B.V., NL-9645 LA Veendam (NL)
(72) Inventor: Middel, Jan, 9468 HL Annen (NL)
(74) Representative: Smulders, Theodorus A.H.J., Ir.

(57) **Abstract**

An automatic box filler for filling boxes with fragile products, such as for instance agricultural products and the like, comprising a substantially horizontal conveying device (3) of which at least one end constitutes a dumping end which in operation can be brought into different positions (7) above a box (8) to be filled, and a lowering device movable up and down and mounted on each dumping end, which lowering device is designed as a vertical conveying device (4) and in operation takes the products to be discharged into the box over from the horizontal conveying device by means of carrier members (11) and transfers them to a lower level in the box to be filled, wherein the carrier members are made of relatively stiff material and are attached in such a manner that the carrier members are pivotable from an outwardly pointing operating position into a direction oriented against the conveying direction.

## Description

The invention relates to an automatic box filler for filling boxes with fragile products, such as for instance agricultural products and the like, comprising a substantially horizontal conveying device, of which at least one end constitutes a dumping end which in operation can be brought into different positions above a box to be filled, and a lowering device movable up and down and mounted on each dumping end, which lowering device is designed as a vertical conveying device and which in operation takes the products to be discharged into the box over from the horizontal conveying device by means of carrier members and transfers them to a lower level in the box to be filled.

Such automatic box fillers are known from practice. Reference can be made, for instance, to the apparatus marketed by Munckhof of Horst (The Netherlands) under the name of "Stationary Large-Box Filler" or the apparatus marketed by the British firm of R.J. Herbert Engineering Ltd. under the name of "Lowerator".

The lowering device of the known box fillers comprises a vertical conveying device comprising parallel rows of carriers of supple material placed transversely to the conveying direction. The products to be processed, such as, for instance, potatoes, onions, fruit, etc. are supplied by the horizontal conveying device, which can comprise a conventional conveyor belt, to the descending track of the vertical conveying device. The products are received by the carriers, mostly designed as fingers, of the vertical conveying device. The rear wall of the vertical conveying device is formed by a plate or a cloth or foil or the like, preventing the products from ending up between the descending and the ascending track and getting damaged. Further, from the level of the horizontal conveying device a depending guide element, for instance a foil or a cloth or the like, is arranged, so that the rows of fingers together with the rear wall and the guide element form closed compartments in which the products are passed down to the bottom of the box or to a layer of previously supplied products. The discharge end of the horizontal conveying device can move back and forth above the box to be filled, so that the box can be filled evenly. The vertical conveying device is as a whole movable up and down with respect to the horizontal conveying device, so that the height of fall of the products at the lower end of the vertical conveying device can always be minimal.

An advantage of the use of supple fingers is that the chances of damage of the products are very slight. If a product threatens to become jammed between, for instance, the discharge end of the horizontal conveying device and the fingers, or between the bottom of a box or products already discharged and the fingers, the fingers will yield resiliently, so that the product is not damaged. A drawback of the use of the supple fingers is that the bearing force thereof is slight, so that a row of fingers can bear a relatively small amount. The loading capacity of a row of fingers can be increased by placing the fingers close to each other. The maximum length of the fingers and hence of the depth of each compartment of the vertical conveying device, however, remains very limited. Further, it is possible to provide the rows of fingers with slight interspace, so that each row needs to carry only a thin layer of products. This means, however, that relatively many carriers are needed, which in turn leads to a relatively high risk of damage and/or failure. Another drawback is that the carriers projecting at the rear side of the vertical conveying device lead to a fairly wide zone at the back of the box that remains inaccessible for the descending track of the vertical conveying device.

Further, at the lower end of the vertical conveying device, between the products already discharged or the bottom of the box, a certain space is always needed to allow the carrier fingers swinging downwards in the lower return zone to pass. This in turn can give rise to wear of the fingers and/or damage of the products already discharged, if the fingers come into contact with the bottom or the products already discharged.

The object of the invention is to obviate the drawbacks outlined and to make available a box filling apparatus with an improved vertical conveying device. To that end, according to the invention, a box filling apparatus of the above-described type is characterized in that the carrier members are made of relatively stiff material and are attached in such a manner that the carrier members are pivotable from an outwardly pointing operating position into a direction oriented against the conveying direction.

Hereinafter, the invention will be further described with reference to the accompanying drawings.
Fig. 1 diagrammatically shows in side view an example of a box filling apparatus comprising a vertical conveying device according to the invention;
Fig. 2 diagrammatically shows in side view an example of a carrier member according to the invention; and
Fig. 3 shows the carrier member of Fig. 2 in a different position.

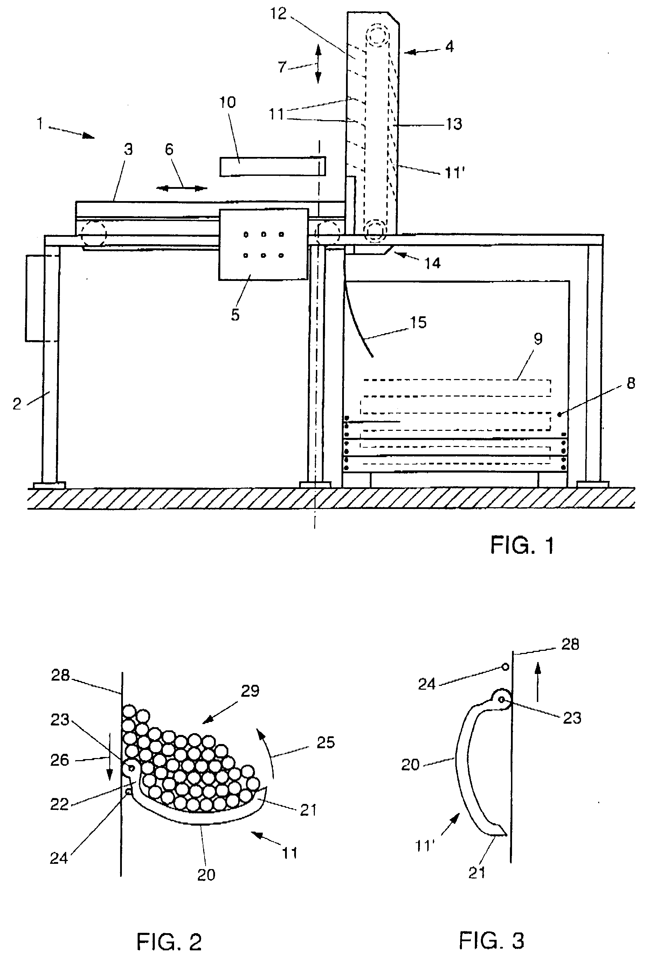

The box filling apparatus 1 shown in Fig. 1 comprises a frame 2, a horizontal conveying device 3 mounted on the frame, and a lowering device in the form of a vertical conveying device, mounted on one of the ends of the horizontal conveying device. The frame further carries a control panel 5. The horizontal conveying device is movable back and forth in the longitudinal direction, as indicated by an arrow 6. The vertical conveying device is movable up and down as indicated by an arrow 7. Because of these possibilities of movement, a box indicated by 8 can for instance be evenly filled according to a pattern indicated by broken lines 9. By 10, a feed device is indicated, which can for instance comprise a vertical conveyor or the like. If so desired, the horizontal conveying device, which can for instance be a belt conveyor, can be provided with a lowering device at both ends, so that a box at one end of the device and a box at the other end of the device can be filled alternately. Such a box can for instance be designed to receive 1000 k of product. The filling time of a box is to the order of 1-2.5 minutes, depending on the construction of the device, and for devices of a great capacity it can even be less than 1 minute.

The vertical conveying device 4 comprises carrier members 11, shown in Fig. 1 in the operating position at 11. The vertical conveying device 4 has a descending track 12 facing the horizontal conveying device 3 and an ascending track 13 located on the rear side. The carrier members in the descending track are outwardly directed, in the direction of the horizontal conveying device, and can receive products supplied by the horizontal conveying device and convey them downwards into the box. This involves a strip of cloth or the like extending downwards from the horizontal conveying device in a known manner, which is diagrammatically indicated at 15 and guides the products at the free ends of the carrier members.

As observed, the carrier members of known devices consist of rows of flexible fingers of supple material. The rows extend transversely to the conveying direction. However, these fingers have little bearing capacity and occupy relatively much space at the lower end and rear side of the vertical conveying device.

According to the invention, rows of relatively narrow carrier members are used, which carrier members are manufactured from much stronger material, such as for instance steel or steel covered with plastic or a strong plastic which may or may not be reinforced. However, these strong carrier members are pivotable against the direction of movement of the vertical conveying device, i.e. the carrier members are pivotable upwards in the descending track and pivotable downwards in the ascending track. This last means that in the lower turning zone 14 of the vertical conveying device, the carrier members will gradually rotate with respect to the original position, until the carrier members in the ascending track have assumed a downwardly suspending position, as indicated at 11' in Fig. 1.

Owing to this construction, the carrier members on the rear side of the vertical conveying device occupy relatively little space, allowing the vertical conveying device to be moved close to the rear wall of the box. Further, because of the pivoting suspension in the lower turning zone, the carrier members cannot forcibly strike the products already sitting in the box or the bottom of the box. Also, if at the location of the supply by the horizontal conveying device, products threaten to become jammed between the horizontal conveying device and the carrier members, the carrier members can swivel upwards, so that damage to the products is prevented.

Hence, in spite of the use of stiffer carrier members, the chances of damage to the products have on the one hand decreased or at most remained the same compared with the situation where supple fingers are used, while on the other, less dead space is occupied and the bearing capacity of the carrier members has substantially increased. This last means that a row of carrier members can carry more products, so that the processing capacity of the box filler can be greater.

Fig. 2 diagrammatically shows a side view of an example of a single carrier member 11 according to the invention and the attachment thereof to the rest of the vertical conveying device 4. The carrier member shown is manufactured from plastic which may or may not be reinforced and has a bottom portion blending at the front and rear sides with upwardly bent front and rear parts 21, 22 respectively. A row of such carrier members constitutes, in the operating position, a kind of trough in which the products to be processed can be received and carried along.

Adjacent the upper end, the rear part 22 is pivoted to the conveying device 4. For this purpose, the conveying device in the example shown has a number of spaced apart cross bars 23, each passed through an eye or opening of a number of carrier members. The cross bars can for instance be attached between two chains on either side of the conveying device or between two belts or the like.

Located below each cross bar 23 is a support member 24 which may for instance consist of a cross bar or cross rod or cross strip or the like, and which prevents the carrier members, suspended from the cross bars 23 so as to be pivotable according to an arrow 25, from swivelling downwards beyond the desired operating position.

The conveying direction of the part of the vertical conveying device 4 shown in Fig. 2 is indicated by an arrow 26. For the sake of completeness, Fig. 3 diagrammatically shows the position of a carrier member according to the invention in the opposite direction of movement, as occurring in the ascending track of the vertical conveying device, indicated by an arrow 27. In that case, the carrier members have collapsed and are suspended with their front ends 21 downwards.

The vertical conveying device has a rear wall 28 which closes the space between the bars 23, 24 and which may for instance consist of a stationary cloth, foil material or plate material. If it is an objection that the products 29 carried along by the carrier members then chafe along the rear wall, an endless rear wall travelling therewith can be used.

It is observed that after the foregoing, various modifications will readily occur to a skilled person, in particular with respect to the shape and the construction material of the carrier members and the suspension and support means therefor. Such modifications are understood to fall within the framework of the invention.

## Claims

1. An automatic box filler for filling boxes with fragile products, such as for instance agricultural products and the like, comprising a substantially horizontal conveying device, of which at least one end constitutes a dumping end which in operation can be brought into different positions above a box to be filled, and a lowering device movable up and down and mounted on each dumping end, said lowering device being designed as a vertical conveying device and in operation taking the products to be discharged into the box over from the horizontal conveying device by means of carrier members and transferring them to a lower level in the box to be filled, **characterized in that** the carrier members are made of relatively stiff material and are attached in such a manner that the carrier members are pivotable from an outwardly pointing operating position into a direction oriented against the conveying direction.

2. An automatic box filler according to claim 1, **characterized in that** each carrier member is provided, at the rear part located opposite the free end, with an eye by means of which the carrier member is pivotally suspended.

3. An automatic box filler according to claim 2, **characterized in that** the eye is a transverse bore formed in the carrier member.

4. An automatic box filler according to claim 2 or 3, **characterized in that** a row of narrow carrier members is in each case attached to one cross bar.

5. An automatic box filler according to any one of the preceding claims, **characterized in that** each carrier member comprises a support portion which, in the operating position, cooperates with a support member to prevent a carrier member from swivelling along the conveying direction.

6. An automatic box filler according to claim 5, **characterized in that** the support member comprises a cross bar or the like provided at a distance below the fastening location of the carrier members.

7. An automatic box filler according to any one of the preceding claims, **characterized in that** the vertical conveying device comprises a rear wall provided behind the carrier members and moving along therewith.

8. An automatic box filler according to any one of the preceding claims, **characterized in that** the carrier members have a bottom portion and a front and a rear part that are bent upwards (in the operating position) from said bottom portion at the front and the rear side respectively.

9. An automatic box filler according to any one of the preceding claims, **characterized in that** the carrier members are manufactured from a strong plastic.
